**Europäisches Patentamt**

**European Patent Office**

**Office européen des brevets**

(11) Publication number: **0 224 108**
**A1**

(12) **EUROPEAN PATENT APPLICATION**

(21) Application number: **86115569.5**

(22) Date of filing: **10.11.86**

(51) Int. Cl.⁴: **A 47 J 17/18**
**A 23 N 7/02**

(30) Priority: **26.11.85 IT 2298085**

(43) Date of publication of application:
**03.06.87 Bulletin 87/23**

(84) Designated Contracting States:
**AT BE CH DE ES FR GB GR IT LI LU NL SE**

(71) Applicant: **Dassi, Gian Luca**
**Via Dellavecchia 7**
**I-28100 Novara(IT)**

(72) Inventor: **Dassi, Gian Luca**
**Via Dellavecchia 7**
**I-28100 Novara(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Patato-peeling device.**

㊗ The present invention relates to a potato-peeling device particularly for household use, having the peculiarity of comprising, on the bottom of a containment body (1), a pair of abrasive rollers (10) with substantially parallel axes and counter-rotating with respect to each other. Members (26) are furthermore provided for moving the potatoes, which members are composed of a cylindrical helical profile with an abrasive surface provided on the lateral surface of the abrasive rollers (10).

Fig.4

## POTATO-PEELING DEVICE

The present invention relates to a potato-peeling device particularly for household use.

As is known, potato-peeling devices for household and industrial use are currently available on the market which are based on the general criterion of providing an abrasion of the surface of the potatoes, so as to remove the peel therefrom.

In a known embodiment, a disk is provided which is rotatable about a vertical axis and lies substantially horizontally on the bottom of a container, which disk has an abrasive surface, so that the potatoes inserted make contact with the rotating abrasive disk and, by virtue of friction, are simultaneously centrifuged against the internal walls of the container from which they are repelled towards the disk in a continuous sequence, so that a superficial abrasion of the potato is achieved which substantially affects the entire surface.

Other devices of a known kind entail the use of a container which has an abrasive surface, against which the potatoes are centrifuged by means of a disk with a vertical axis which, in turn, can be abrasive or not.

Other known solutions entail the use of a container with abrasive walls which is subject, as well as to the rotating motion, to other motions around oblique axes, so as to cause the potatoes contained therein to be placed in constant contact with the walls which perform the removal of the peel.

The devices of the prior art generally have the disadvantage of removing from the surface of the potato an excessive amount of product due to the fact that the contact between the potato and the abrasive zone always occurs in an abrasive region which is either plane, as in the case of the disk, or concave, as in the case of the internal surface of the container, so that during the removal of the peel there occurs a superficial smoothing action of the potato, which tends to reduce the potato to a substantially spheroidal or egg-shaped or ovaloid configuration, with the removal of an excessive amount of product.

Another disadvantage which can be ascribed to the solution of the type described above, apart from causing an excessive wastage of product, since a significant amount of product is abraded, is constituted by the fact that the excessive amount of product tends to clog the abrsive material, so that these devices are subject to frequent pauses in order to perform the cleaning with the removal of the wastage.

The aim proposed by the invention is indeed to eliminate the above described disadvantages, by providing a potato-peeling device particularly for household use which allows the possibility of achieving the superficial abrasion of the potato, with the removal of the peel, without removing excessive amounts of product, since the potatoes, during the peeling phase, are not subject to a centrifugal action which unavoidably tends to reduce them to a spheroidal configuration.

Within the scope of the above described aim, a particular object of the invention is to provide a potato-peeling device, specifically designed for household use, which allows the possibility of removing the peel of the potato without significantly scraping the potato itself, so that the potato substantially tends to maintain its original configuration even during the peeling process.

Still another object of the present invention is to provide a potato-peeling device which is configured in such a manner as to make all the cleaning operations particularly quick and easy, thus contributing to maintain the required assurances of hygiene.

Not least object of the present invention is to provide a potato-peeling device which is particularly versatile, small and competitively cost-effective.

The above described aim, as well as the objects described and others which will become apparent hereinafter, are achieved by a potato-peeling device particularly for household use, according to the invention, characterized in that it comprises, on the bottom of a containment body (1), a pair of abrasive rollers (10), with substantially parallel axes and counter-rotating with respect to each other, means (26) being furthermore provided for moving the potatoes, which means are operatively connected to said abrasive rollers.

Further characteristics and advantages will become better apparent from the description of a preferred, but not exclusive, embodiment of a potato-peeling device particularly for household use, illustrated only by way of example in the accompanying drawings, where:

Fig. 1 is an exploded partial cross section view of the potato-peeling device, according to the invention;

Fig. 2 is a top view of the potato-peeling device with a cross section view of the motor accommodation zone;

Fig.3 is a schematic perspective view of the supporting frame or cage of the abrasive rollers;

Fig. 4 is a cross section view along the line IV-IV of Fig. 2;

Fig. 5 is a cross section view along the line V-V of Fig. 2;

Fig. 6 is a cross section view along the line VI-VI of Fig. 2, with a schematic illustration of the potatoes during the peeling phase.

With reference to the above described figures, the potato-peeling device for household use, according to the invention, comprises a containment body 1 which, when viewed in plan, preferably, but not necessarily, has a substantially rectangular conformation with rounded corners.

The containment body 1 is upwardly closeable by means of an ordinary lid 2 having, obviously, a matching shape.

On the bottom of the containment body 1, abrasive rollers are provided, generally indicated by the reference numeral 10, which are arranged in such a manner as to occupy substantially all the area of the bottom of the container 1 and have axes which are parallel to each other.

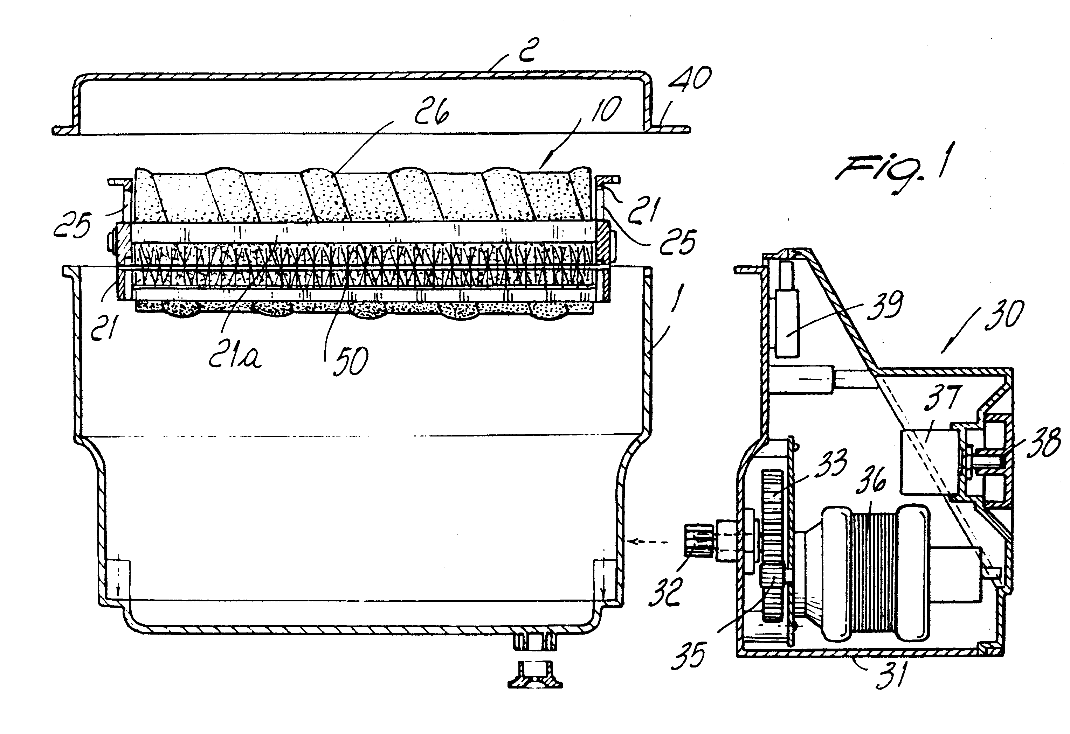

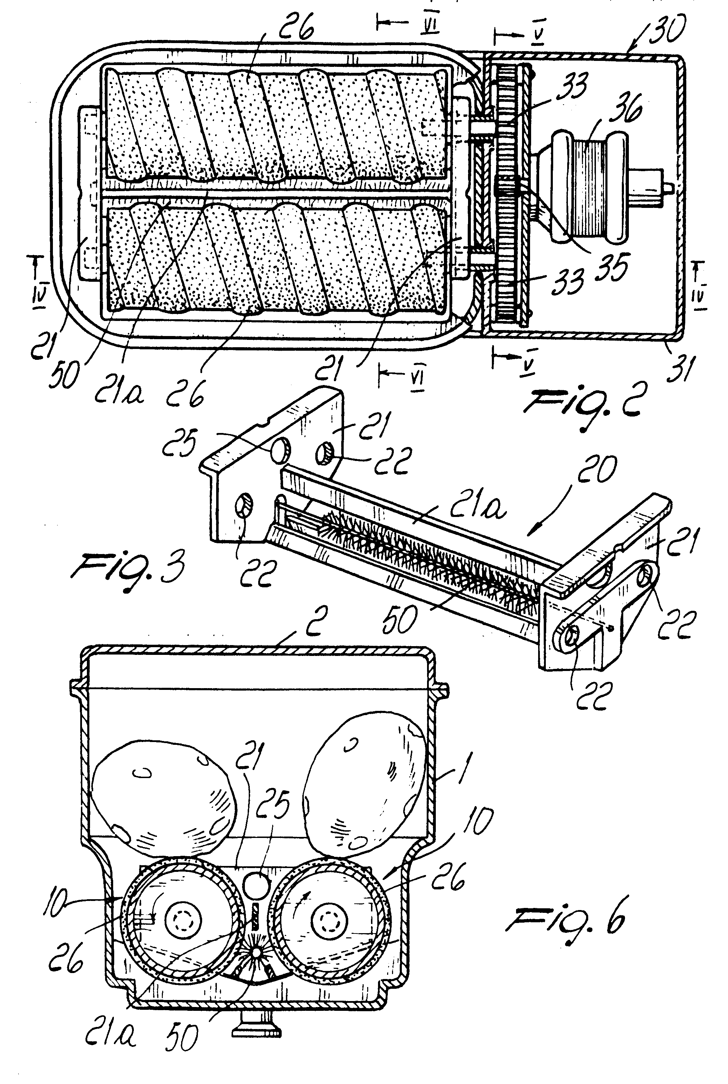

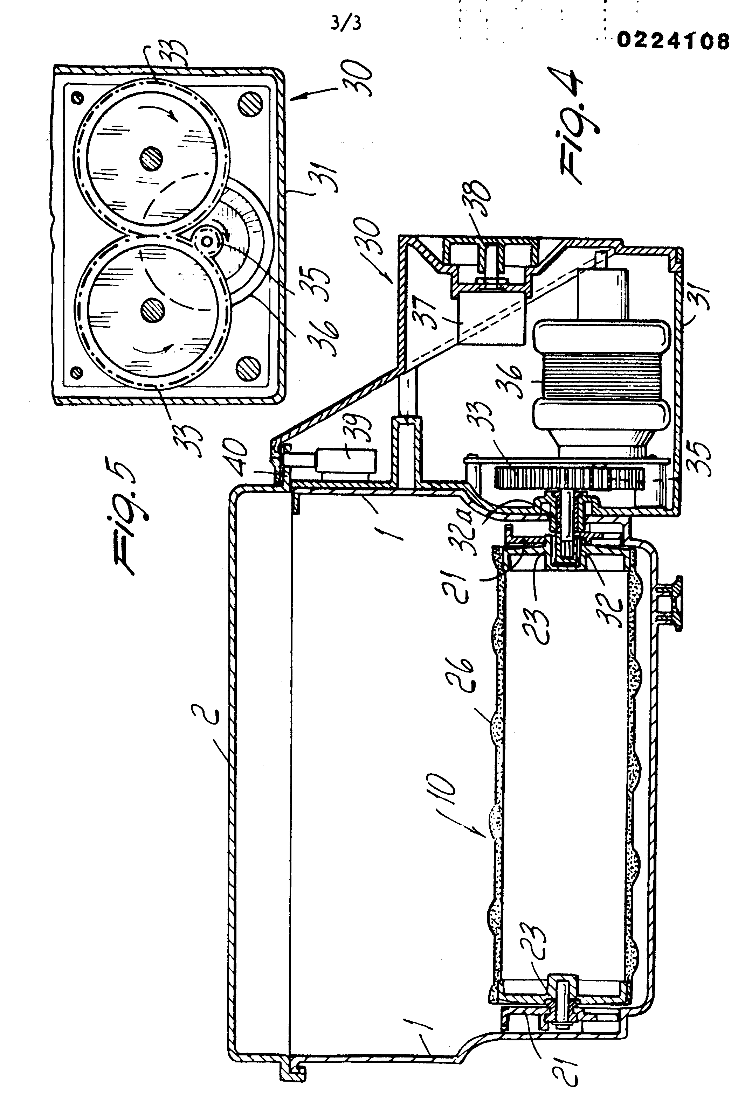

The abrasive rollers 10 are rotatably supported by an extractable frame, designated with the reference numeral 20 and illustrated in Fig. 3, which is substantially composed of a first and a second head 21, connected to each other by virtue of stiffening members 21a. The heads define through holes 22 in which axial tangs 23 engage rotatably and in practice provide the axis of rotation of the rollers 10.

Furthermore, the heads 21 have grip holes 25 which allow the easy extraction of the rollers from the containment body for their washing.

The rollers 10 have, as has been mentioned, an abrasive surface and have thereon means which perform the moving of the potatoes during the peeling phase; these means are composed of a protruding profile 26 extending along a cylindrical helix and also provided in abrasive material. These profiles, which can provide a helix with one or more origins, have, in a transverse cross section, a convex shape in order to gain better access to the irregularly shaped regions of the face of the potatoes.

The rollers counter-rotate with respect to one another, and, more precisely, in the upper region which provides the active working region of the rollers, they have a diverging peripheral motion between the rollers, i.e. they have, in the region of the active surface, a motion directed towards the outer walls of the container, as illustrated by the arrows of Fig. 6.

To impart the rotation to the rollers, a motor assembly is provided, generally designated with the reference numeral 30, which is accommodated in a box-like container 31 which is expediently removably engageable with the containment body.

The motor assembly defines a pair of polygonal pivots 32 for transmitting the motion, which engage inside the axial tang 23 of the rollers 10 to impart the motion thereto. The pivots 32 are advantageously rigidly coupled with gearwheels 33 engaged with each other, so as to impart opposite directions of rotation to the two pivots. The gearwheels take up the motion with a reducer system, e.g. from a pinion 35 which is operated by an electric motor 36 accommodated in the box-like container 31.

Inside the box-like container 31 the electric componentry is also provided, which can comprise a timer 37 with an adjustment knob 38 which is accessible from the inside as well as a safety switch 39 which allows the operation of the motor only if activated by the tab 40 provided on the lid arranged to close the containment body 1.

The coupling of the box-like container 31 to the containment body 1 can be performed by means of e.g. a tab 41 which inserts in a slot provided on the upper edge of the container 1, as well as by virtue of the coupling performed by the pivots 32.

For the sake of completeness of description, it should be furthermore added that ordinary anti-friction bushes 32a are provided on the pivots 32.

It should be furthermore added that means are also provided for removing the abraded particles from the rollers, which means are advantageously composed of a brush 50 which is supported by the heads 21 and which engages with the surface of the rollers so as to remove the particles abraded during the rotation of the rollers, thus preventing quick clogging of the abrasive material during operation.

Furthermore, it should be added that the profiles which extend in a cylindrical helix have, for both rollers, the same direction of winding. In practical operation, after inserting the potatoes and closing the lid, the electric motor is started, so that the abrasive rollers assume on a reciprocally opposite rotating motion. Each roller directs its upper tangential motion, i.e. in the active working region, towards the wall it is adjacent to.

With reference to the accompanying drawing, the roller arranged on the right rotates clockwise, while the roller arranged on the left rotates anticlockwise, and the helical profile, being right-handed for both the rollers, will create, as will be better described hereinafter, a circulating motion for the potatoes, with a clockwise path along the periphery of the bottom.

By introducing haphazardly the potatoes and imparting the rotating motion to the abrasive rollers, the potatoes are scraped by the abrasive surface at the point in which they are in contact with the rollers and are simultaneously moved in such a manner as to arrange a different point to be in contact with the rollers in a consecutive sequence.

Furthermore, the presence of the cylindrical helix profile causes the potato to shift axially along the roller, in the direction which is imparted substantially by the component of the axial motion which is imparted by the profile. A potato, once it has reached the end of the roller, is then pushed towards the end of the adjacent roller, which will move the potato, additionally to the potato's own rotational motions, along a direction which is opposite to that imparted by a preceding roller.

The abrasive profile, as already mentioned, is intended, as well as for moving the potatoes longitudinally, for exerting an abrasive action in the recessed regions which are rather frequent in potatoes, so as to be able to affect the entire surface of the potato without an excessive wastage of product, i.e. without abrading the potato excessively in some regions and less in other ones.

While the rollers keep moving, the potatoes are forced to trace in only one direction the internal perimeter of the tank, while they rotate on themselves with a variable axis.

The kind of dynamics imposed allows the possibility of maximally increasing the probability of making contact between the threaded rollers and different points of the surface of the potato and furthermore the cross section of the abrasive rollers, which obviously have a convex outer shape, which therefore acts advantageously on the potato with respect to the concave or plane surfaces of the prior art, as well as the convex protrusions provided by the abrasive profile, make it possible to obtain, in a relatively short operating time, well-peeled potatoes which closely resemble their original shape, without an appreciable loss in weight.

In practical use, the operating time of the motor can be controlled by the timer, which allows, for each separate instance, the choice of the time deemed optimum for performing the complete peeling of the potatoes.

Another important feature is that all of the electric components, such as the motor, the timers, switches etc. are applied on a unit which can be separated from the containment body where the cleaning of the potatoes occurs, so that it is removable during the ordinary washing operations which can even be performed in a dishwasher.

Another important aspect of the invention is that the particular configuration of the rollers with the protruding profile keeps the potatoes always both in transverse and rotating motion, thus ensuring that all the points of the surface of the potato, no matter what its shape may be, make contact with an abrasive surface which, since it is convex, penetrates more easily and therefore better removes the peel of the potato even in the regions which are less easily accessible.

The invention thus conceived is thus susceptible of numerous modifications and variations, all of which are within the scope of the inventive concept.

Furthermore, all the details can be replaced by other technically equivalent ones.

Practically, the materials employed, so long as compatible with the specific use, as well as the dimensions and the contingent shapes, can be any according to the requirements.

## CLAIMS

1. Potato-peeling device particularly for household use, characterized in that it comprises, on the bottom of a containment body, a pair of abrasive rollers with a substantially parallel axis and counter-rotating with respect to each other, means being furthermore provided for moving the potatoes, which means are operatively connected to said abrasive rollers.

2. Potato-peeling device according to the preceding claim, characterized in that said means for moving the potatoes are composed of at least one cylindrical helix profile (26) provided on the lateral surface of said rollers (10).

3. Potato-peeling device according to the preceding claims, characterized in that said cylindrical helix profile (26) has a convex active surface.

4. Potato-peeling device. according to one or more of the preceding claims, characterized in that said cylindrical helix profile (26) has a convex abrasive surface.

5. Potato-peeling device, according to one or more of the preceding claims, characterized in that said rollers (10) counter-rotate with respect to each other to achieve, on the active upper surface, a direction of shift directed towards the adjacent walls of said containment body (1).

6. Potato-peeling device, according to one or more of the preceding claims, characterized in that said pair of rollers is rotatably supported by a frame (20) which is removably insertable in said containment body (1).

7. Potato-peeling device, according to one or more of the preceding claims, characterized in that it comprises a brush (50) supported by the heads (21) of said frame (20) and engaged with the lower surface of said pair of rollers (10) to remove the abraded product.

8. Potato-peeling device, according to one or more of the preceding claims, characterized in that each of said rollers (10) has a cylindrical helix profile (26) with the same configuration.

9. Potato-peeling device, according to one or more of the preceding claims, characterized in that it comprises a box-like container (31) for containing an operating motor (36) of said rollers (10) removably engageable with said containment body (1) and actively engageable with said pair of rollers (10).

10. Potato-peeling device, according to one or more of the preceding claims, characterized in that it comprises a pair of polygonal pivots (32) protruding from said box-like container (31) and engageable with axial tangs (23) of said pair of rollers (10) for imparting the rotation thereto.

11. Potato-peeling device, according to one or more of the preceding claims, characterized in that it comprises a lid (2) which can be arranged to close said containment body (1) and provided with a tab (40) engageable with a safety switch (39) provided inside said box-like container (31) to allow the operation of said motor (36) only when the lid (2) is applied.

*Fig. 1*

*Fig. 2*

*Fig. 3*

*Fig. 6*

*Fig.5*

*Fig.4*

**European Patent Office**

## EUROPEAN SEARCH REPORT

Application number

EP 86 11 5569

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 547 863 (NOWOSADEK) <br> * Pages 12-14; figures 1,2 * | 1,2,5, 8 | A 47 J 17/18 <br> A 23 N 7/02 |
| X | FR-A- 624 375 (JAHN & Cie) <br> * Whole document * | 1-4,8 | |
| A | DE-B-1 145 316 (LEHNARD) <br> * Figures 2-5 * | 1-4 | |
| A | DE-C- 456 642 (NAVARRE & FILS) <br> * Page 2, lines 44-52; figure 2 * | 7 | |
| A | GB-A- 655 218 (PRZYBYLSKI) <br> * Whole document * | 1 | |
| | | | **TECHNICAL FIELDS SEARCHED (Int. Cl. 4)** |
| A | FR-A-2 063 221 (GATINEAU) <br> * Figures 5,7 * | 1-4 | A 47 J <br> A 23 N |
| A | US-A-2 065 163 (URSCHEL) <br> * Whole document * | 1 | |

The present search report has been drawn up for all claims

| Place of search | Date of completion of the search | Examiner |
|---|---|---|
| THE HAGUE | 05-03-1987 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82